# EUROPÄISCHE PATENTSCHRIFT

(11) **EP 0 883 456 B1**
(45) Veröffentlichungstag und Bekanntmachung des Hinweises auf die Patenterteilung: **03.04.2002**
(21) Anmeldenummer: 97951241.5
(22) Anmeldetag: 19.11.1997
(51) Int. Cl.: B23C 1/08, B23Q 39/00

(54) **WERKZEUGMASCHINE MIT MEHREREN SPINDELN**
MACHINE TOOL WITH A PLURALITY OF SPINDLES
MACHINE-OUTIL COMPORTANT PLUSIEURS BROCHES

(30) Priorität: 17.12.1996 DE 19652460
(43) Veröffentlichungstag der Anmeldung: 16.12.1998
(73) Patentinhaber: Hüller Hille GmbH, 71636 Ludwigsburg (DE)
(72) Erfinder: HORN, Wolfgang, D-74385 Pleidelsheim (DE); FRANK, Walter, D-35469 Allendorf (DE); KELLERT, Hans-Dieter, D-65232 Taunusstein (DE)
(74) Vertreter: Dahlkamp, Heinrich-Leopold, Dipl.-Ing.
(86) Internationale Anmeldenummer: EP9706458
(87) Internationale Veröffentlichungsnummer: WO9826891

(56) Entgegenhaltungen:
- DE-A- 4 020 997
- DE-A- 4 414 844
- JP-A- 61 065 710
- US-A- 5 336 025

## Beschreibung

Die Erfindung bezieht sich auf eine Werkzeugmaschine mit mehreren parallel zueinander, vorzugsweise senkrecht angeordneten Spindeln gemäß Oberbegriff des Anspruches 1 wie sie die JP 61 065 710 A zeigt.

Aus der DE 195 14 058 A1 ist eine Werkzeugmaschine mit mehreren Spindeln für die gleichzeitige oder unterschiedliche, getrennte Bearbeitung mehrerer Werkstücke bekannt, wobei die um ihre Drehachse antreibbaren und in ihre Achsrichtung verfahrbaren Spindeln in unmittelbar gegeneinander abgestützten, in einer senkrecht zur Verfahrrichtung der Spindeln stehenden Richtung gemeinsam oder relativ zueinander verfahrbaren, einen Gesamtschlitten bildenden Teilschlitten aufgenommen sind und nur der Gesamtschlitten auf zwei nebeneinander liegenden Schienen auf dem Maschinengrundkörper geführt ist. Die Spindeln sind dabei in einer Ebene quer zu den Schienen zwischen den beiden Stützwänden für die Schienen angeordnet. Naturgemäß befindet sich dabei auch die Bearbeitungsstation zwischen den beiden Stützwänden und der gesamte Arbeitsraum ist im wesentlichen nur von den beiden offenen Stirnseiten zugänglich. Von der einen Seite werden die Werkzeuge und von der anderen Seite die Werkstücke zu- und abgeführt. Das Problem bei dieser Anordnung liegt darin, dass der Raum für die Bearbeitung und für den Transport der Werkstücke für den Wartungs- und Bedienungsmann nur sehr schwer zugänglich ist. Insbesondere kann der Bedienungsmann nicht oder nur schwer von einer Position aus gleichzeitig die Bearbeitungsstelle und das Transportband für die Werkstücke überwachen und bedienen. Außerdem ist die Konstruktion zur Verfahrbarkeit der Spindeln mit einem Gesamtschlitten und zwei gegeneinander abgestützten Teilschlitten sehr aufwendig.

In der DE 34 16 660 C2 ist darüber hinaus eine Drehmaschine mit einer vertikal im Spindelstock angeordneten Arbeitsspindel, mit auf dem Spindelstock angebrachtem Antriebsmotor, mit am unteren Ende der Arbeitsspindel angeordnetem Werkstückspannfutter und mit unterhalb der Arbeitsspindel angeordnetem Werkzeugträger beschrieben, wobei der Spindelstock einseitig an einer senkrechten Befestigungsebene angeordnet und in vertikaler und horizontaler Richtung verfahrbar ist. Dabei entspricht der vertikale und horizontale Bewegungshub einerseits dem Vorschub für die Drehbearbeitung und dient andererseits zur Bewegung des Spannfutters zu einem seitlich angeordneten Werkstücktransportband. Durch die Verwendung nur einer Arbeitsspindel kann hierbei nur eine begrenzte Anzahl von Werkstücken bearbeitet werden. Zur Erhöhung der Leistungsfähigkeit ist hierzu auch bereits vorgeschlagen worden, mehrere baugleiche Drehmaschinen in Längsrichtung des Werkstücktransportbandes in "Reihe zu schalten", wobei allerdings eine Bedienung ebenfalls nur von der dem Werkstücktransportband abgekehrten Stirnseite möglich ist.

Aus einem Prospekt der Gebrüder Brinkmann GmbH ist schließlich eine Doppelspindelvertikaldrehmaschine für die simultane Bearbeitung von zwei Werkstücken bekannt, wobei beide Spindeln fest auf einem gemeinsamen Schlitten angeordnet sind und mit diesem einseitig an einer senkrechten Befestigungswand in vertikaler und horizontaler Richtung verfahrbar sind. Die beiden Spindeln können weder in horizontaler noch in vertikaler Richtung relativ zueinander bewegt werden, sodass z.B. Maßungenauigkeiten an den zu bearbeitenden Werkstücken hierdurch nicht ausgeglichen werden können.

Der Erfindung liegt die Aufgabe zu Grunde, eine Werkzeugmaschine mit mehreren Spindeln der gattungsgemäßen Art vorzuschlagen, bei der die zum Stand der Technik aufgeführten Probleme nicht bestehen und insbesondere bei hoher Leistungsfähigkeit auch eine bedienungsfreundliche und platzsparende Konstruktion erreicht wird.

Die Lösung dieser Aufgabe ist im Patentanspruch 1 angegeben. Die Unteransprüche 2 bis 11 enthalten sinnvolle Ausführungsformen dazu.

Bei der erfindungsgemäßen Konstruktion ist für den gleichzeitigen Betrieb von zwei oder mehreren Spindeln vorgesehen, dass alle Spindeln für die horizontale Verfahrbarkeit vom Transportband zur Bearbeitungsstelle und zurück (X-Richtung) mit einem eigenen Schlitten auf denselben in unterschiedlichen Höhen an einer vorzugsweise senkrechten oder im wesentlichen senkrechten Befestigungsebene angeordneten Führungsbahnen unabhängig voneinander abgestützt verfahrbar sind. Die Schlitten sind dabei in der Weise ineinander verschachtelt, dass der oder die äußeren Schlitten den oder die nächsten inneren Schlitten rahmenartig umschließen. Wichtig ist hierbei, dass jeder einzelne Schlitten für sich auf seinen beiden Führungsbahnen geführt ist und auch zur Korrektur der Ungenauigkeiten an den Werkstücken eine Relativbewegung der einzelnen Schlitten gegeneinander möglich ist. Jeder einzelne Schlitten ist dabei für sich an den Führungsbahnen abgestützt, sodass auch bei unterschiedlichen mechanischen Beanspruchungen es nicht zu einer gegenseitigen Positionsbeeinflussung kommt.

Es können erfindungsgemäß zwei oder auch mehrere Spindeln in ihrer Grundstellung in einer Ebene senkrecht zu den Führungsbahnen angeordnet werden. Für den Werkstück- oder Werkzeugwechsel werden diese Spindeln dann gemeinsam in X-Richtung bis zu dem möglichst nahe neben dem Bearbeitungsraum liegenden Transportband verfahren. Dieses Transportband ist zweckmäßigerweise senkrecht zur Führungsbahn angeordnet, sodass alle Spindeln gleichzeitig ihre Werkstücke oder Werkzeuge auf der einen Seite des Transportbandes hintereinander ablegen können und anschließend auf der parallel danebenliegenden anderen Seite des Transportbandes wiederum gleichzeitig neue Werkstücke oder Werkzeuge aufnehmen können. Durch die einseitige Anordnung der Führungsbahnen an einer senkrechten Befestigungsebene sind sämtliche Bearbeitungsstellen für den Bedienungsmann zumindest von zwei Seiten gut zugänglich und außerdem liegt auch die Be- und Entladestelle des Transportbandes direkt im Blickbereich des Bedienungsmannes.

Jede Spindel kann erfindungsgemäß am Schlitten in senkrechten Führungen verfahrbar sein und ist dabei insbesondere an vier Punkten auf den Führungsbahnen abgestützt, wobei in X-Richtung vor und hinter den Spindeln jeweils ein Träger an der oberen und der unteren Führungsbahn geführt ist.

Die erfindungsgemäß ineinander verschachtelten Schlitten besitzen zweckmäßigerweise einen gemeinsamen Antrieb für das Verfahren auf den waagerechten Führungsbahnen in X-Richtung. Zur Relativbewegung zwischen den einzelnen Spindeln in diesen beiden Richtungen können dann einfache zusätzliche Verschiebeeinrichtungen vorgesehen werden.

Es hat sich als günstig erwiesen, jeder Spindel einen ringförmigen Werkzeug- und/oder Werkstückträger mit radial nach außen gerichteten Werkzeugen und/oder Werkstücken zuzuordnen, wobei alle Werkzeug- und/oder Werkstückträger eine gemeinsame, waagerechte, senkrecht zur Führungsbahn angeordnete Drehachse besitzen sollten. Wenn jeder dieser Träger für sich alleine drehbar ist, kann auf einfache Weise z.B. bei Ausfall eines Werkzeuges bzw. Werkstückes durch Drehen dieses einen Trägers das nächste Werkzeug bzw. Werkstück zur Verfügung gestellt werden.

Die Werkzeuge bzw. Werkstücke können erfindungsgemäß auch auf einer waagerechten Scheibe mit senkrechter zentraler Drehachse angeordnet sein, wobei jeweils die zu einer Spindel gehörigen Werkzeuge bzw. Werkstücke auf einer eigenen Kreisbahn angeordnet sind und jeweils die Anzahl der Kreise der Anzahl der Spindeln entspricht. Sämtliche Werkstücke bzw. Werkzeuge für die Spindeln sind dann auf einer Linie in radialer Richtung angeordnet, sodass ein Werkzeug- bzw. Werkstückwechsel nach Drehung der Scheibe möglich ist.

Alternativ können die Werkzeuge bzw. Werkstücke auch auf geraden, parallel zu den Führungsbahnen angeordneten Werkzeug- und/oder Werkstückträgern angeordnet sein. Diese bestehen zweckmäßigerweise aus fest angeordneten, d.h. nicht verfahrbaren Blockleisten. Durch Verfahren der Spindeln können dann die Werkzeuge bzw. Werkstücke aus diesen festen Positionen in den Blockleisten entnommen bzw. in diesen Positionen abgelegt werden.

Im Hinblick auf eine Vervielfachung des Durchsatzes können ohne weiteres mehrere baugleiche Werkzeugmaschinen an einem Transportband in der Weise positioniert werden, dass zwei mit ihren Befestigungsebenen Rücken an Rücken bzw. spiegelbildlich angeordnet sind. Das ist eine besonders platzsparende Bauweise. Außerdem können die miteinander verbundenen Werkzeugmaschinen möglichst viele gemeinsame Versorgungs- und Steuereinrichtungen besitzen.

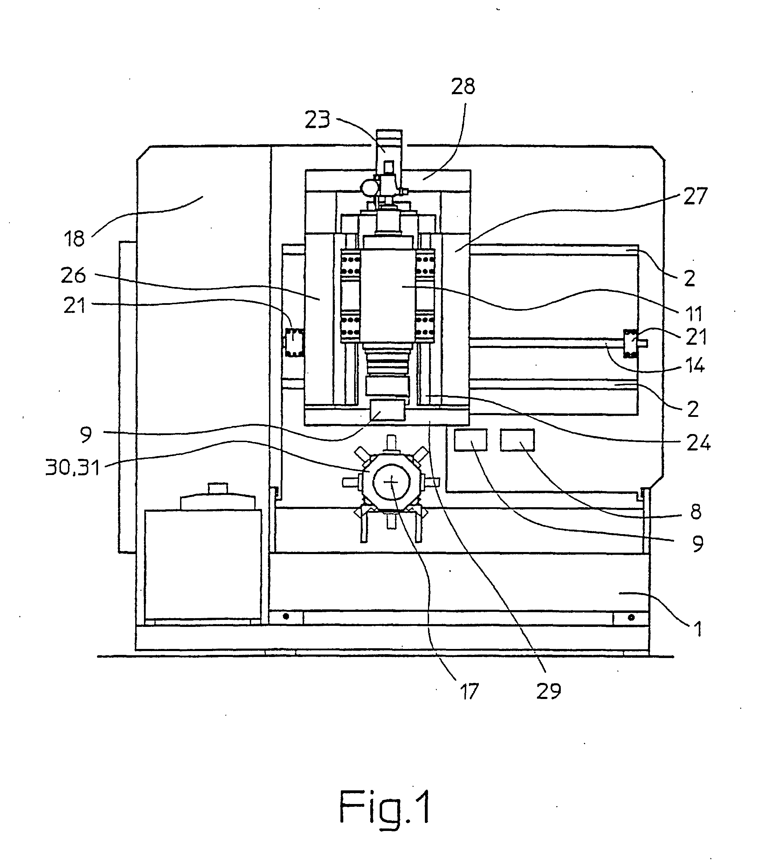

Die Erfindung wird anhand der beigefügten Figuren 1 bis 7 beispielsweise näher erläutert. Es zeigen
- Fig. 1: eine Frontansicht,
- Fig. 2: eine Draufsicht und
- Fig. 3: eine Seitenansicht eines Ausführungsbeispiels der erfindungsgemäßen Werkzeugmaschine mit zwei Spindeln.
- Fig. 4: ist eine vergrößerte Darstellung der ineinander verschachtelten Schlitten.
- Die Fig. 5 und 6: zeigen in der Draufsicht und Seitenansicht zwei weitere Ausführungsbeispiele der erfindungsgemäßen Werkzeugmaschine in der "Rücken an Rücken"-Anordnung.
- Fig. 7: ist eine Variante zur Draufsicht nach Fig. 2.

In einem Ausführungsbeispiel besteht die erfindungsgemäße Werkzeugmaschine aus einem Grundrahmen oder Maschinenbett 1 und einer vorzugsweise senkrechten Befestigungsebene, an der in unterschiedlichen Höhen zwei in X-Richtung verlaufende Führungsbahnen 2 angeordnet sind. Auf diesen Führungsbahnen 2 werden sowohl der äußere X-Schlitten 3 als auch der innere X-Schlitten 4 in horizontaler Richtung von der Bearbeitungsstation bis zum Transportband 5 verfahren. An dem äußeren Schlitten 3 ist in senkrechter Richtung (Z-Richtung) die äußere Spindel 11 verfahrbar angeordnet. Parallel zu dieser Spindel 11 ist an dem inneren Schlitten 4 die Spindel 10 angeordnet.

Die Spindeln 10,11 besitzen an ihrem unteren Ende Einrichtungen zum Einspannen der Werkstücke 8,9 oder der Werkzeuge 6,7, für die Bearbeitung und für den Transport vom Transportband 5 zur Bearbeitungsstelle. In den Figuren ist die bevorzugte Ausführung dargestellt, wobei von den Spindeln 10,11 jeweils die Werkstücke 8,9 aufgenommen und transportiert werden und die Werkzeuge 6,7 bei der Bearbeitung fest am Werkzeugträger 30,31, angeordnet sind. Bei der Bearbeitung werden also die Werkstücke 8,9 mit Hilfe der Spindeln 10,11 gedreht sowie in X- und Z-Richtung bewegt, während die Werkzeuge 6,7 fest sind. Prinzipiell kann dieses aber auch umgekehrt sein, sodass die Werkstücke unten festgehalten werden und die Werkzeuge mit Hilfe der Spindeln bewegt werden. Der Einfachheit halber wird nachfolgend nur die erste Ausführungsvariante beschrieben. An der Bearbeitungsstelle werden durch Absenken der sich drehenden Spindeln 10,11 auf die Werkzeuge 6,7 die Werkstücke 8,9 gleichzeitig bearbeitet. Sämtliche einer Spindel 10,11 zugeordneten Werkzeuge 6,7 sind auf einem Werkzeugträger 30,31 radial nach außen gerichtet angeordnet. Durch Drehen dieser Werkzeugträger 30,31 um die waagerechte Drehachse 17 kann ein neues Werkzeug in Arbeitsposition gebracht werden. Den beiden Spindeln 10,11 ist jeweils ein Spannzylinder bzw. Werkzeugspanner 12,13 zugeordnet. Die beiden X-Schlitten 3,4 besitzen jeweils einen Rahmen, an dem mit Hilfe von senkrechten Führungen 24,25 die dazwischen liegenden Spindeln 10,11 in senkrechter Richtung verfahrbar sind. Hierfür können die beiden Spindeln 10,11 entweder eine gemeinsame oder je eine getrennte Antriebsspindel 15 besitzen. Den Antriebsspindeln 15 sind Motoren 23 und 32 zugeordnet. Die senkrechten Rahmen 26,27 sind etwa im Bereich der vier Ecken mit waagerechten Querträgern 28,29 verbunden, deren freie Enden an den Führungsbahnen 2 verfahrbar gelagert sind.

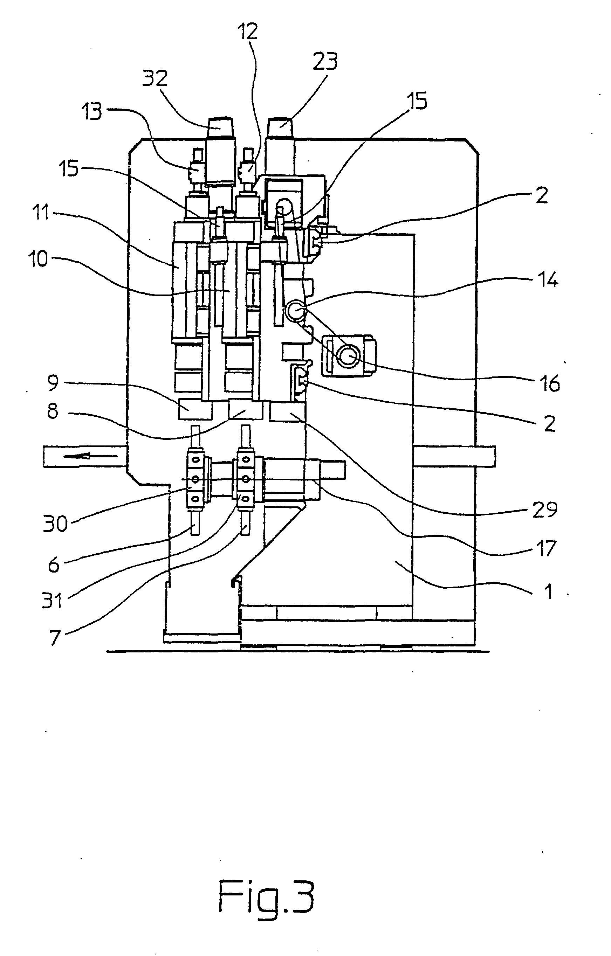

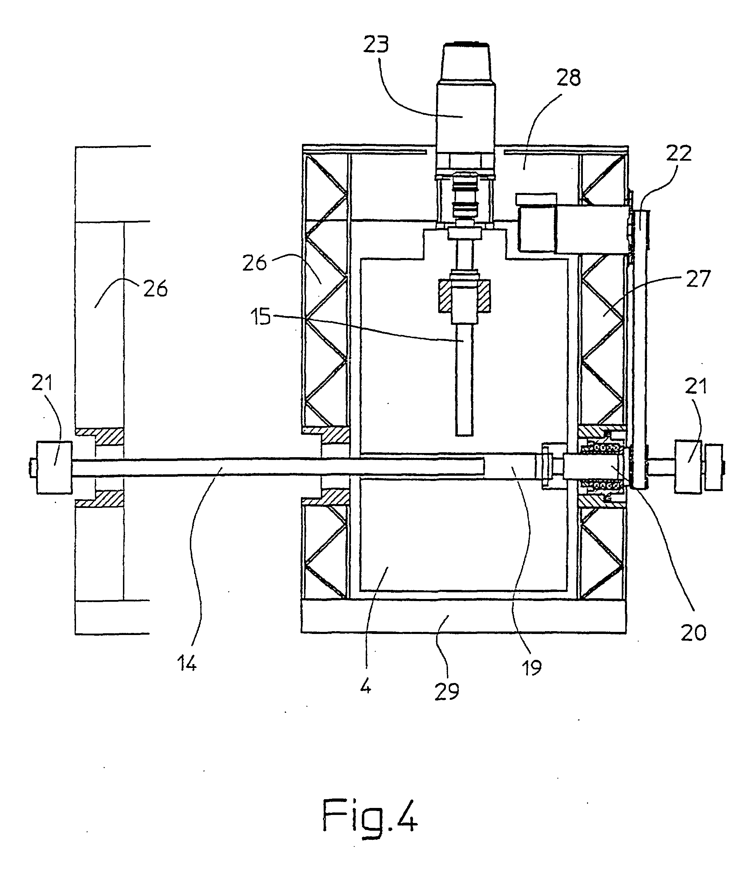

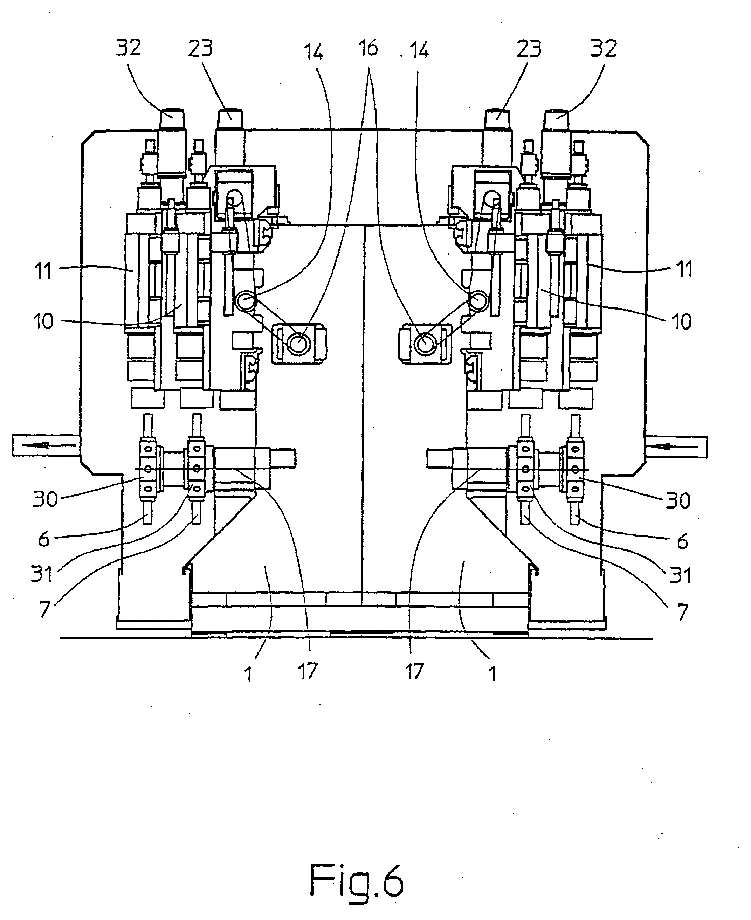

In der Fig. 4 ist im vergrößerten Maßstab die Anordnung der Spindel 11 am Rahmen 26-29 dargestellt. Innerhalb dieses Rahmens bzw. dahinter befindet sich der innere X-Schlitten 4. Mit Hilfe der Antriebsspindel 14, die die beiden Lager 21, eine feste Mutter 19 und eine angetriebene Mutter 20 besitzt, können beide X-Schlitten 3,4 mit den daran befestigten Spindeln 10,11 in horizontaler Richtung verfahren werden. In der Fig. 4 ist in der linken Hälfte die Endposition des Rahmens 26 mit dünnen Linien dargestellt. Für die Relativbewegung der beiden Schlitten 3,4 bzw. der Spindeln 10,11 gegeneinander dient eine fest am Rahmen 27 angeordnete Verstelleinrichtung 22. In den Seitenansichten der Figuren 3 und 6 ist zusätzlich der Antrieb 16 für die Antriebsspindel 14 dargestellt.

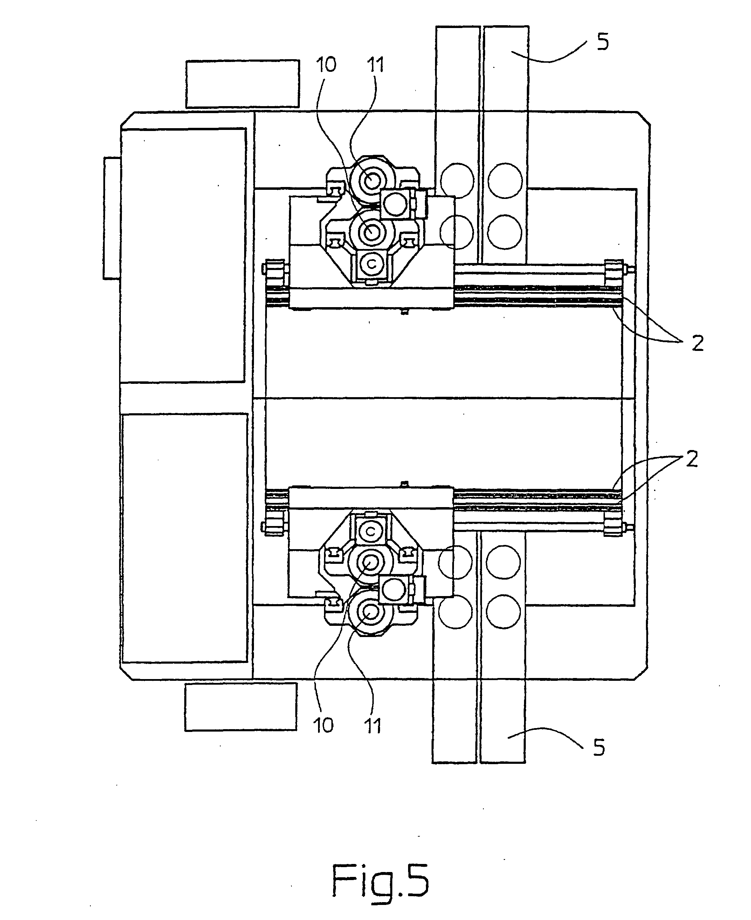

Die Figuren 5 und 6 zeigen eine besonders günstige Anordnung von jeweils zwei erfindungsgemäßen Werkzeugmaschinen in der "Rücken an Rücken"-Anordnung an einem gemeinsamen Transportband 5. Hierdurch ist ein besonders günstiger modularer Aufbau der Maschinen gezeigt. Gegenüber einer einfachen Einspindeldrehmaschine kann hierdurch der Durchsatz z.B. vervierfacht werden.

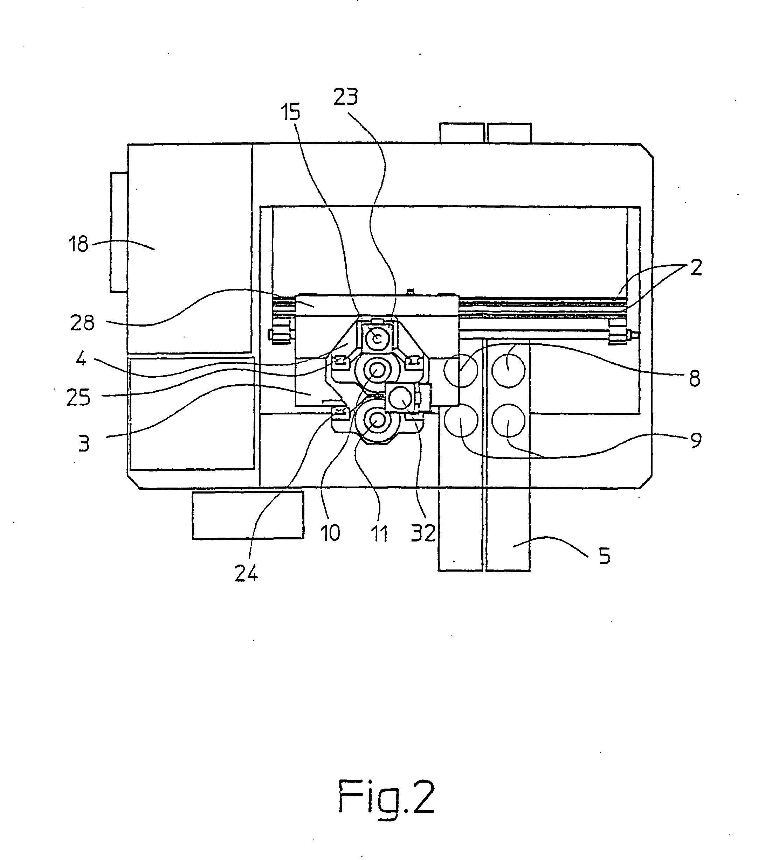

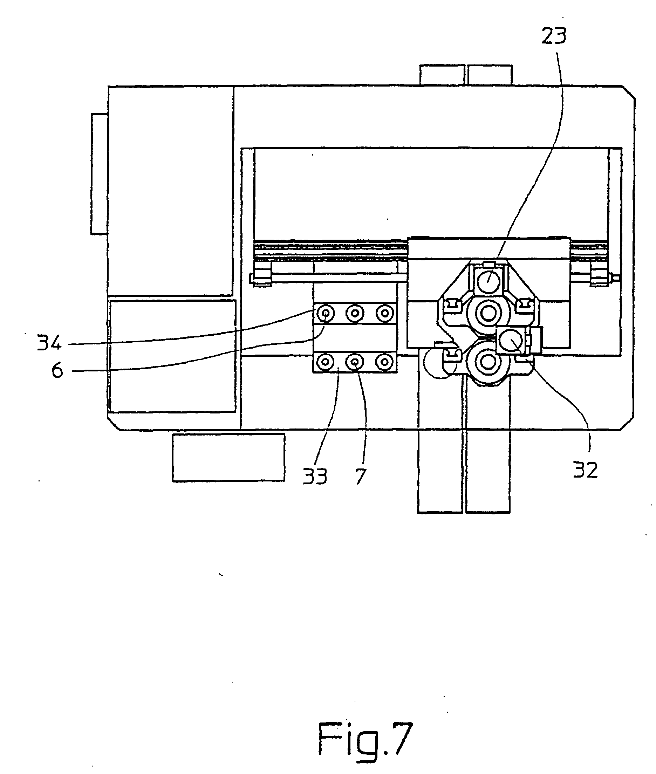

In Fig. 7 sind ergänzend zu der Darstellung nach Fig. 2 den beiden Spindeln 10,11 zugeordnete Werkzeugträger 33,34 dargestellt. Diese bestehen aus in X-Richtung angeordneten geraden, stationären Blockleisten mit Aufnahmen zur senkrechten Anordnung der Werkzeuge 6,7. Die im Patentanspruch 8 beschriebene Scheibe zur Aufnahme von Werkzeugen bzw. Werkstücken ist in den Figuren nicht dargestellt.

### Bezugszeichenliste:

- 1: Maschinenbett
- 2: Führungsbahn in X-Richtung
- 3: äußerer X-Schlitten
- 4: innerer X-Schlitten
- 5: Transportband für Werkstücke und/oder Werkzeuge
- 6, 7: Werkzeug
- 8, 9: Werkstück
- 10, 11: Spindel
- 12, 13: Spannzylinder bzw. Werkzeugspanner
- 14: Antriebsspindel für 3 bzw. 4
- 15: Antriebsspindel für 10 bzw. 11
- 16: Antrieb für 14
- 17: Drehachse von 30, 31
- 18: Schaltschrank u.a. für Energieversorgung und Steuerung
- 19: feste Mutter
- 20: angetriebene Mutter
- 21: Lager von 14
- 22: Verstelleinrichtung für 4 gegenüber 3
- 23: Motor für 15
- 24: senkrechte Führung von 11 in 3
- 25: senkrechte Führung von 10 in 4
- 26,27: Rahmen von 3
- 28,29: waagerechte Querträger von 3
- 30, 33: Werkzeug- und/oder Werkstückträger von 11
- 31, 34: Werkzeug- und/oder Werkstückträger von 10
- 32: Motor

## Patentansprüche

1. Werkzeugmaschine mit mehreren parallel zueinander, vorzugsweise senkrecht, angeordneten Spindeln (10,11) für den Transport der Werkstücke (8,9) oder der Werkzeuge (6,7) zur Bearbeitungsstelle und zurück und für die gleichzeitige oder unterschiedliche, getrennte Bearbeitung mehrerer Werkstücke (8,9), wobei die um ihre Drehachsen antreibbaren und in ihrer Achsrichtung verfahrbaren Spindeln (10,11) an horizontalen Führungsbahnen (2) gemeinsam oder relativ zueinander verfahrbar sind, wobei alle Spindeln (10,11) mit jeweils einem eigenen Schlitten (3,4) auf in unterschiedlichen Höhen, einseitig an einer Befestigungsebene angeordneten Führungsbahnen (2) unabhängig voneinander abgestützt verfahrbar sind **dadurch gekennzeichnet, dass** die Schlitten (3,4) in der Weise ineinander verschachtelt sind, dass der oder die äußeren Schlitten (3) den oder die inneren Schlitten (4) rahmenartig umschließen.

2. Werkzeugmaschine nach Anspruch 1, **dadurch gekennzeichnet, dass** die Spindeln (10,11) in ihrer Grundstellung in einer Ebene senkrecht zu den Führungsbahnen (2) angeordnet sind.

3. Werkzeugmaschine nach Anspruch 1 oder 2, **dadurch gekennzeichnet, dass** jede Spindel (10,11) an einem Schlitten (3,4) in senkrechten Führungen (24,25) verfahrbar ist.

4. Werkzeugmaschine nach Anspruch 1, 2 oder 3, **dadurch gekennzeichnet, dass** die Spindeln (10,11) mittig in ihren Schlitten (3,4) angeordnet und auf jeder Führungsbahn (2) vor und hinter den Spindeln (10,11) geführt sind.

5. Werkzeugmaschine nach mindestens einem der vorhergehenden Ansprüche, **dadurch gekennzeichnet, dass** die ineinander verschachtelten Schlitten (3,4) einen gemeinsamen Antrieb (14) für das Verfahren auf den Führungsbahnen (2) besitzen.

6. Werkzeugmaschine nach mindestens einem der vorhergehenden Ansprüche, **dadurch gekennzeichnet, dass** mehrere Spindeln (10,11) einen gemeinsamen oder mehrere Antriebe (15) für das Verfahren in vertikaler Richtung besitzen.

7. Werkzeugmaschine nach mindestens einem der vorhergehenden Ansprüche, **dadurch gekennzeichnet, dass** jeder Spindel (10,11) ein ringförmiger Werkzeug- und/oder Werkstückträger (30,31) mit radial nach außen gerichteten Werkzeugen (6,7) und/oder Werkstücken (8,9) zugeordnet ist und dass alle Werkzeug- und/oder Werkstückträger (30,31) eine gemeinsame, waagerechte, senkrecht zur Führungsbahn (2) angeordnete Drehachse (17) besitzen.

8. Werkzeugmaschine nach mindestens einem der vorhergehenden Ansprüche, **dadurch gekennzeichnet, dass** die Werkzeuge (6,7) und/oder Werkstücke (8,9) auf einer waagerechten Scheibe mit senkrechter zentraler Drehachse auf konzentrischen der Anzahl der Spindeln (10,11) entsprechenden Kreisbahnen angeordnet sind.

9. Werkzeugmaschine nach mindestens einem der vorhergehenden Ansprüche, **dadurch gekennzeichnet, dass** die Werkzeuge (6,7) und/oder Werkstücke (8,9) auf geraden, parallel zu den Führungsbahnen (2) angeordneten Werkzeug- und/oder Werkstückträgern (33,34) angeordnet sind.

10. Anordnung von mehreren Werkzeugmaschinen nach den vorhergehenden Ansprüchen, wobei die Befestigungsebene für die Führungsbahnen (2) zweier baugleicher Werkzeugmaschinen mit ineinander verschachtelten Schlitten (3,4) und darin angeordneten Spindeln (10,11) Rücken an Rücken angeordnet sind.

11. Anordnung nach Anspruch 6, **dadurch gekennzeichnet, dass** mindestens zwei Rücken an Rücken miteinander verbundene Werkzeugmaschinen gemeinsame Versorgungseinrichtungen besitzen.

## Claims

1. Machine tool with a plurality of spindles (10,11) arranged in parallel to each other, preferably vertically arranged, for transportation of work pieces (8,9) or tools (6,7) to and back from the point of machining , and for a simultaneous or different, separate machining of several work pieces (8,9), with it being possible to drive the spindles (10,11) around their pivoting axes and to move them in the direction of their axis being movable at horizontal guide tracks (2) jointly or relatively to each other, with all spindles (10,11) being movable, supported independently of each other, each on skid (3,4) of their own on guide tracks (2) arranged at different elevations unilaterally at one fixing plane, **characterized in that** said skids (3,4) are so interconnected that the outer skid(2) (3) embrace (s) the inner skid(s) (4).

2. Machine tool in accordance with Claim 1, **characterized in that** said spindles (10,11), if being in their home position, are arranged in one plane vertically to the guide tracks (2).

3. Machine tool in accordance with Claim 1 or 2, **characterized in that** each spindle (10,11) is movable at one skid (3,4) in vertical guides (24,25).

4. Machine tool in accordance with Claim 1, 2 or 3, **characterized in that** the spindles (10,11) are centrally arranged in their skids (3,4) and guided on each guide track (2) upstream and downstream of said spindles (10,11).

5. Machine tool in accordance with at least one of the preceding claims, **characterized in that** the interconnected skids (3,4) possess a common drive (14) for travel on the guide tracks (2).

6. Machine tool in accordance with at least one of the preceding claims, **characterized in that** several spindles (10,11) possess a common drive or several drives (15) for travel in vertical direction.

7. Machine tool in accordance at least one of the preceding claims, **characterized in that** a ringlike tool and/or work piece carrier (30,31) with tools (6,7) and/or work pieces (8,9) radially directed outwardly is allocated to each spindle (10,11) and that all tool and/or work piece carriers (30,31) possess a common, horizontal pivoting axis (17) arranged vertically to the guide track (2).

8. Machine tool in accordance with at least one of the preceding claims, **characterized in that** the tools (6,7) and/or work pieces (8,9) are arranged on a horizontal disk with a vertical central pivoting axle on concentric trajectories corresponding to the number of spindles (10,11).

9. Machine tool in accordance at least one of the preceding claims, **characterized in that** the tools (6,7) and/or work pieces (8,9) are arranged on straight tool and/or work piece carriers (33,34) arranged in parallel to the guide tracks (2).

10. Arrangement of several machine tools in accordance with the preceding claims, with the fixing plane for said guide tracks (2) of two machine tools being identical in construction with interconnected skids (3,4) and spindles (10,11) arranged therein are arranged "back-to-back".

11. Arrangement in accordance with Claim 6, **characterized in that** at least two machine tools connected "back-to-back" with each other possess common supply facilities.

## Revendications

1. Machine-outil comportant plusieurs broches (10,11) parallèles entre elles et disposées de préférence verticalement pour le transport des pièces (8,9) ou des outils (6, 7) au lieu d'usinage et leur transport de retour et pour l'usinage simultané ou différencié de plusieurs pièces (8,9), les broches (10,11) motorisées selon leur axe de rotation et mobiles dans le sens de ce même axe étant déplaçables sur des glissières de guidage (12) horizontales ensemble ou les unes par rapport aux autres, toutes les broches (10,11) avec chacune un propre chariot (3,4) pouvant être déplacées, en étant appuyées indépendamment les unes des autres, sur des glissières de guidage (2) disposées unilatéralement dans un plan de fixation à différentes hauteurs, **caractérisée en ce que** les chariots (3,4) sont imbriqués les uns dans les autres de manière telle que le ou les chariots extérieurs (3) entourent le ou les chariots intérieurs (4) pour former un cadre.

2. Machine-outil selon la revendication 1, **caractérisée en ce que** les broches (10, 11) sont disposées dans leur position de base dans un plan verticalement aux glissières de guidage (2).

3. Machine-outil selon la revendication 1 ou 2, **caractérisée en ce que** chaque broche (10, 11) est susceptible d'être déplacée sur un chariot (3,4) dans des dispositifs de guidage verticaux (24,25).

4. Machine-outil selon la revendication 1, 2 ou 3, **caractérisée en ce que** les broches (10,11) sont disposées au centre dans leur chariot (3,4) et qu'elles sont guidées sur chaque glissière de guidage (2) devant et derrière les broches (10,11).

5. Machine-outil selon au moins l'une des revendications précédentes, **caractérisée en ce que** les chariots (3,4) imbriqués les uns dans les autres possèdent un moteur commun (14) pour le déplacement sur les glissières de guidage (2).

6. Machine-outil selon au moins l'une des revendications précédentes, **caractérisée en ce que** plusieurs broches (10,11) possèdent un moteur commun ou plusieurs moteurs (15) pour le déplacement dans le sens vertical.

7. Machine-outil selon au moins l'une des revendications précédentes, **caractérisée en ce qu**'un porte-outil et/ou porte-pièce (30,31) annulaire avec outils (6,7) et/ou pièces (8,9) orientés radialement vers l'extérieur est affecté à chaque broche (10,11) et que tous les porte-outils et/ou porte-pièces (30,31) possèdent un axe de rotation (17) commun, horizontal et disposé verticalement par rapport à la glissière de guidage (2).

8. Machine-outil selon au moins l'une des revendications précédentes, **caractérisée en ce que** les outils (6,7) et/ou les pièces (8,9) sont disposés sur un disque horizontal avec un axe de rotation central vertical sur des orbites concentriques correspondant au nombre de broches (10,11).

9. Machine-outil selon au moins l'une des revendications précédentes, **caractérisée en ce que** les outils (6,7) et/ou les pièces (8,9) sont disposés sur des porte-outils et/ou porte-pièces (33,34) droits parallèles aux glissières de guidage (2).

10. Disposition de plusieurs machines-outils selon au moins l'une des revendications précédentes, **caractérisée en ce que** les plans de fixation des glissières de guidage (2) de deux machines-outils de construction identique, avec chariots (3,4) imbriqués les uns dans les autres et broches (10,11) logées dans ces derniers, sont disposés << dos à dos >>.

11. Disposition de plusieurs machines-outils selon la revendication 6, **caractérisée en ce qu**'au moins deux machines-outils reliées entre elles « dos à dos » possèdent des dispositifs d'alimentation communs.
